Europäisches Patentamt

European Patent Office

Office européen des brevets

(19)

(11) Veröffentlichungsnummer : **0 342 451 B1**

# (12) EUROPÄISCHE PATENTSCHRIFT

(45) Veröffentlichungstag der Patentschrift :
15.07.92 Patentblatt 92/29

(51) Int. Cl.⁵ : **F16L 37/14**

(21) Anmeldenummer : **89108127.5**

(22) Anmeldetag : **05.05.89**

(54) **Verriegelung für eine fluidische Steckverbindung zwischen einer Fluidleitung und einem Anschlussteil.**

(30) Priorität : **21.05.88 DE 3817472**

(43) Veröffentlichungstag der Anmeldung :
**23.11.89 Patentblatt 89/47**

(45) Bekanntmachung des Hinweises auf die Patenterteilung :
**15.07.92 Patentblatt 92/29**

(84) Benannte Vertragsstaaten :
**FR GB IT SE**

(56) Entgegenhaltungen :
**AU-B- 2 092 970**
**DE-A- 2 849 133**
**DE-A- 3 143 015**
**DE-B- 1 525 454**
**DE-B- 2 542 284**
**DE-U- 7 918 697**
**US-A- 3 929 357**
**US-A- 4 453 747**
**US-A- 4 591 192**

(73) Patentinhaber : **DAIMLER-BENZ AKTIENGESELLSCHAFT**
**Mercedesstrasse 136**
**W-7000 Stuttgart 60 (DE)**

(72) Erfinder : **Gmeiner, Günter**
**Hans-Holbeinstasse 17**
**W-7032 Sindelfingen (DE)**
Erfinder : **Andres, Rudolf**
**Watzmannstrasse 59**
**W-7032 Sindelfingen (DE)**
Erfinder : **Möller, Hermann**
**Blücherstrasse 11**
**W-7034 Gärtringen (DE)**
Erfinder : **Schaible, Kurt**
**Finkenweg 22**
**W-7031 Aidlingen (DE)**

EP 0 342 451 B1

**Beschreibung**

Die Erfindung bezieht sich auf eine Verriegelung einer fluidischen Steckverbindung mit den Merkmalen des Oberbegriffs des Patentanspruchs 1.

Eine Verriegelung mit diesen Merkmalen ist bekannt (AU-B-20,929/70) und umfaßt einen zur Einsteckseite eines Anschlußteils hin längs geöffneten Führungsschlitz mit T-Nut-Querschnitt, in den eine U-förmige Verriegelungsklammer senkrecht zur Einsteckrichtung des Leitungsendes einschiebbar ist. Zur Leitungsseitigen Aufnahme der Schenkel der Verriegelungsklammer ist gemäß der AU-B in den Leitungssteckern jeweils eine Ringnut vorgesehen, die in axialer Richtung zum Leitungsende hin durch einen radial auskragenden Ringbund begrenzt ist. In diese Ringnut kann die Verriegelungsklammer nur in genau einer Stellung des Leitungsendes bezüglich des Einsteckteils eingeschoben werden, so daß aufgrund Falschsteckens der Leitung mangelhaft oder nicht gesicherte Steckverbindungen nicht auftreten können. Durch die Längsöffnung des Führungsschlitzes ist auch sichergestellt, daß ein nur angeschnäbeltes Einstecken des Leitungsendes auf den ersten Blick erkannt werden kann. Die genannten Vorteile der bekannten Verriegelung müssen allerdings damit erkauft werden, daß an das eigentliche Leitungsende jeweils ein separater Stecker dichtend anzuschließen ist und daß beim Einschieben der Verriegelungsklammer gelegentlich aufgrund von Toleranzen die Ringnut auf die richtige Höhe gegenüber dem Führungsschlitz gebracht werden muß.

Bei den in Kraftfahrzeugen üblicherweise verwendeten, relativ dünnwandigen Fluidleitungen wäre es nicht möglich, eine Ringnut der im Stand der Technik beschriebenen Art ohne nennenswertes Bruchrisiko (wegen Kerbwirkung) unmittelbar in die Leitungswand einzuformen.

Bekannt ist ferner eine wesentlich einfachere und daher kostengünstig herstellbare Steckverbindung für Rohrleitungen insbesondere in Kraftfahrzeugen mit einer in Führungsbohrungen geführten U-förmigen Verriegelungsklammer (DT-OS 1 425 470). Sie kann im Hydrauliksystem von Fahrzeugen überall dort eingesetzt werden, wo einzelne Fluidleitungen steckbar mit Anschlußteilen von Ventilen, Hubzylindern und dergleichen verbunden werden müssen. Die auftretenden hohen Drücke - bis zu 190 bar - erfordern formschlüssige Leitungsverriegelungen. Der Vereinfachung von Herstellung, Montage und Wartung kommt die konstruktive Gestaltung der bekannten Verriegelung und Steckverbindung sehr entgegen, da die Fluidleitung selbst mit einem angestauchten, radial auskragenden, umlaufenden Widerlager in Bundform versehen ist, welches von einer in zwei die Anschlußbohrung des Anschlußteils tangential durchdringenden Führungsbohrungen quer zur Achse der Anschlußbohrung geführten U-förmigen Klammer hintergreifend überdeckbar ist. Ein spezieller Stecker wird für diese Bauart von Steckverbindungen nicht benötigt, so daß von vornherein keine Abdichtungsprobleme zwischen einem Stecker und der anzuschließenden Fluidleitung auftreten können.

Fehlerhafte, d. h. falsch oder unvollständig gesteckte Verbindungen können mit dieser bekannten Verriegelung allerdings nicht ausgeschlossen werden. Denn die Ebene der Führungsbohrungen für die Klammer muß zwangsläufig mit bestand unter der Einsteckseite des Anschlußteils liegen. Daher kann es aber vorkommen, daß die Klammer bzw. deren beide Schenkel unter dem Widerlager einer nicht richtig eingesteckten Fluidleitung hindurchgeschoben werden, statt dieses korrekt hintergreifend zu überdecken. Da das Widerlager aber auch dann bereits in die Anschlußbohrung eingetaucht sein kann, ist bei einer flüchtigen Sichtkontrolle der Anschein einer korrekt gesteckten und verriegelten Steckverbindung gewahrt.

Die Erfindung hat daher die Aufgabe, bei gleichbleibender Montagesicherheit einer gattungsgemäßen Verriegelung ein einfacheres Einstecken der Verriegelungsklammer zu ermöglichen.

Diese Aufgabe wird mit den kennzeichnenden Merkmalen des Hauptanspruchs erfindungsgemäß gelöst.

Die Klammer selbst wird mit einem Abweiser versehen, der sich in der Längsöffnung des Führungsschlitzes mindestens über deren gesamte Tiefe erstreckt und beim Einschieben der Klammer in den Führungsschlitz innerhalb der Längsöffnung einen definierten Raum überstreicht, welcher die lichte Weite der Längsöffnungin die Einschieberichtung projiziert - auf ein Maß verringert, welches kleiner als das Außenmaß des an die Fluidleitung angestauchten Widerlagers, jedoch geringfügig größer als das Außenmaß der Leitung in deren sich längs des Abweisers erstreckendem Bereich ist.

Wie bei der zuvor genannten einfacheren Steckverbindung kann der Außendurchmesser der Leitung beidseits des Widerlagers gleichbleibend geringer als der Außendurchmesser des Widerlagers sein.

Diese mehr wirkungsmäßigen Angaben verdeutlichen, daß bereits mit der Verriegelung nach dem Hauptanspruch das oben beschriebene Problem - nämlich daß die Klammer das Widerlager der Fluidleitung unterläuft, anstatt es zu überdecken - nicht mehr in der genannten Weise auftreten kann. Denn durch den Abweiser wird mindestens sichergestellt, daß das Widerlager bei eingeschobener Klammer entweder in der Anschlußbohrung sitzt, wo es hingehört, oder gut sichtbar oberhalb der Einsteckseite des Anschlußteils bleibt. In Zwischenstellungen des Widerlagers läßt sich die Klammer erst gar nicht einschieben, weil der Abweiser dann an dem Widerlager anläuft.

Es sind auch weitere Verriegelungen für fluidische Steckverbindungen bekannt, die eine U-förmige Klammer zum Verriegeln aufweisen.

So ist aus der DE-AS 25 42 284 eine derartige Verriegelung bekannt, die jedoch nicht einzelne Fluidleitungen sichert, sondern Steckelemente, welche mehrere Fluidleitungen in Blöcken zusammenfassen, wobei die Klammer wie beim gattungsbildenden Stand der Technik in Führungslöchern geführt ist.

Aus der DE-OS 28 49 133 ist auch eine Verriegelung mit U-förmiger Klammer für fluidische Steckverbindungen bekannt, mit welcher einzelne mit je einer Fluidleitung dicht verbundene Stecker in Anschlußbohrungen verriegelbar sind. Hier ist ferner die Führung der Klammer zur Einsteckseite des Anschlußteils hin geöffnet, allerdings im Unterschied zu der beanspruchten Verriegelung nicht längs, sondern quer zur Einschieberichtung der Klammer. Eine Sichtkontrolle der unter Aufweitung der bereits voll eingeschobenen Klammer herstellbaren Steckverbindungen ist zwar auch hier möglich, führt aber aufgrund der Form der Stecker nicht zu so eindeutigen Ergebnissen wie bei der beanspruchten Verriegelung.

Schließlich ist aus dem DE-GM 79 18 697 eine U-förmige Klammer zum Zusammenfügen zweier in axialer Flucht angeordneter Fluidleitungen bzw. einer Fluidleitung und eines diese aufnehmenden Anschlußteils bekannt, welche je ein durch Umlaufnuten gebildetes Widerlager an beiden Fluidleitungen bzw. an der einen Fluidleitung und an dem Anschlußteil außenseitig hintergreifend überdeckt.

Aus allen vorerwähnten Druckschriften kann kein Hinweis auf die beanspruchte Ausbildung sowohl der Führung für die Klammer als auch der Klammer selbst entnommen werden. Insbesondere ein an die Klammer angeformter, mit einem falsch in der Anschlußbohrung positionierten Widerlager unweigerlich kollidierender Abweiser kann aus dem genannten Stand der Technik nicht hergeleitet werden.

Die Unteransprüche offenbaren mit ihren kennzeichnenden Merkmalen vorteilhafte Weiterbildungen der erfindungsgemäßen Verriegelung.

Es gibt mehrere Möglichkeiten zur geometrischen Ausbildung des Führungsschlitzes mit Längsöffnung, die die vorgegebenen Anforderungen erfüllen, z. B. T-Nut-Führung oder schwalbenschwanzähnliche Führungen.

Ferner werden unterschiedliche Ausführungen der Klammer selbst beansprucht, unter denen sich eine Form mit einer Vormontagemöglichkeit besonders heraushebt.

Ausführungsbeispiele der erfindungsgemäßen Verriegelung sind in der Zeichnung dargestellt und werden im folgenden eingehend beschrieben.

Es zeigen:

Figur 1 eine erste, einfache Variante der Verriegelung in einer Schnittdarstellung,

Figur 2 die Klammer der einfachen Variante in der Draufsicht,

Figur 3 eine zweite, verbesserte Variante der Verriegelung in einer Schnittdarstellung,

Figur 4 einen Mittellängsschnitt durch die Klammer der zweiten Variante,

Figur 5 eine Draufsicht der Darstellung nach Figur 4 und

Figur 6 eine Draufsicht auf eine im Anschlußteil in einer Vormontagestellung befindliche Klammer.

Eine Fluidleitung 1 ist mit einem Ende 2 und einem diesem Ende axial benachbarten, radial in Form eines Ringbundes auskragenden Widerlagers 3 in eine Anschlußbohrung 4 eines Anschlußteils 5 eingesteckt.

Das Widerlager 3 sitzt auf einem in die Anschlußbohrung 4 eingepreßten Stützring 6 auf, während ein noch unter dem Stützring angeordneter Dichtring 7 sich dichtend an die Fluidleitung 1 anlegt.

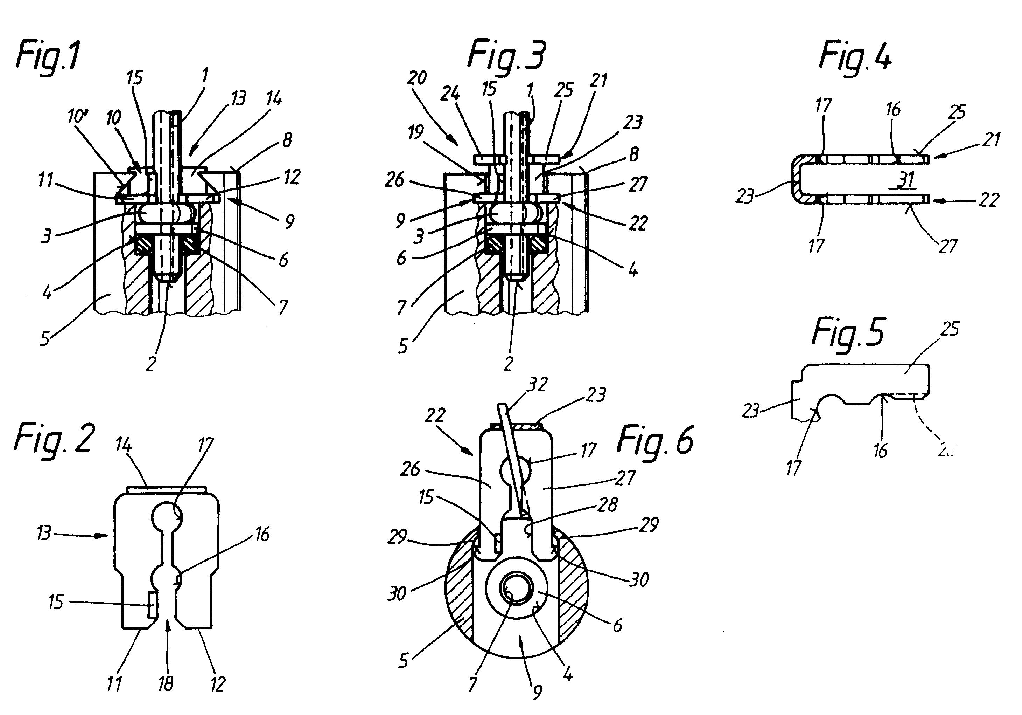

Der Anschlußteil 5 - der z.B. Teil eines Ventils, Hubzylinders oder dergleichen ist - weist einen quer zu der Achse der Anschlußbohrung 4 und parallel zu seiner Einsteckseite 8 - in welche die Anschlußbohrung 4 mündet - verlaufenden Führungsschlitz 9 auf, welcher in Figur 1 den Grund einer Schwalbenschwanzführung 10′ mit einer in der Einsteckseite 8 des Anschlußteils 5 verlaufenden Längsöffnung 10 bildet. Längs des Führungsschlitzes 9 ist ein Paar von Schenkeln 11/12 einer Klammer 13 quer zur Achse der Anschlußbohrung 4 geführt in eine das Widerlager 3 der Fluidleitung 1 hintergreifend überdeckende Stellung einschiebbar.

Eine hochragende Fahne 14 der Klammer 13 erleichtert das manuelle Einschieben der Klammer. An den Schenkel 11 der Klammer 13 ist ein Abweiser 15 angeformt, der parallel zur Achse der Anschlußbohrung 4 von dem Schenkel 11 abragt und dessen Höhe der Einsenktiefe der den Führungsschlitz 9 durch ihre Längsöffnung 10 längs offenhaltenden Schwalbenschwanzführung 10′ entspricht, so daß sein freies Ende etwa in der Ebene der Einsteckseite 8 des Anschlußteils 5 liegt.

Figur 2 zeigt, daß die Klammer 13 U-förmig ist und daß eine erste, dem Durchmesser der Fluidleitung 1 entsprechende Ausnehmung 16 sowie eine zweite Ausnehmung 17 zwischen den beiden durch einen Langsspalt 18 getrennten Schenkeln 11 und 12 eingeschlossen sind.

Dabei ist die erste Ausnehmung 16, welche in eingeschobener Stellung der Klammer 13 die Fluidleitung 1 aufnimmt, in ihrem zu den freien Enden der Schenkel 11 und 12 hin weisenden Flanken clipsartig verengt, so daß die Klammer 13 nur unter vorübergehender elastischer Aufweitung des Längsspaltes 18 bei eingesteckter Fluidleitung 1 letztere umgreifend eingeschoben werden kann. Die Schenkel 11 und 12 sind an ihren zum Längsspalt 18 weisenden vorderen Ecken angefast, um das Einschieben der Klammer 13 zu erleichtern.

Letzterer Vorgang kann nur bei entweder voll in die Anschlußbohrung 4 eingetauchtem oder sichtbar oberhalb der Einsteckseite 8 befindlichem Widerlager 3 der Fluidleitung 1 ablaufen. In allen Zwischenstellungen des Widerlagers 3 läuft der Abweiser 15 während des Einschiebevorgangs gegen dieses an und sperrt die weitere Bewegung der Klammer 13.

Figur 3 stimmt in weiten Teilen mit Figur 1 überein; insoweit sind gleiche Bezugszeichen für gleiche Teile verwendet, die hier nicht mehr eigens erwähnt werden. Die hier dargestellte Variante der Verriegelung unterscheidet sich zum einen in der Form der Längsöffnung des Führungsschlitzes 9, welcher hier als der Querspalt einer T-Nut 19 ausgebildet ist; die lichte Weite der Längsöffnung - des "Stiels" der T-Nut - ist also auch hier - wie in Figur 1 - kleiner als die Breite des Führungssschlitzes 9.

Eine doppelt U-förmige Klammer 20 ist der zweite wesentliche Unterschied zur ersten Variante. Diese besteht aus zwei Armen 21 und 22, die durch einen Steg 23 miteinander verbunden sind und jeweils in ein Paar von Schenkeln 24 und 25 bzw. 26 und 27 gegabelt sind. Die Breite des Steges 23 ist kleiner als die lichte Weite der Längsöffnung des Führungsschlitzes 9. Seine einen freien Raum 31 zwischen den beiden Armen 21 und 22 bestimmende Länge ist mindestens so groß wie der Abstand des Führungsschlitzes 9 von der Einsteckseite 8, so daß der eine Arm 22 mit seinen Schenkeln 26 und 27 im Führungsschlitz 9 geführt verschiebbar ist und der andere Arm 21 mit seinen Schenkeln 24 und 25 oberhalb der Einsteckseite 8 bleibt.

Der Abweiser 15 am Schenkel 26 hat dieselbe Funktion wie in Figur 1. Er verhindert hier ferner das Eintauchen des Widerlagers 3 in den freien Raum 31 zwischen den Armen 21 und 22 während des Einschiebens der Klammer 20.

Die Fluidleitung 1 wird also in der zweiten Verriegelungsvariante von zwei Paaren von Schenkeln umgriffen, wobei hier nur die Schenkel 24 und 25 eine clipsartige Ausnehmung 16 - analog Figur 1 - bilden, wie aus Figuren 4 und 5 ersichtlich. Diese beiden Figuren zeigen weitere jeweils um 90° geklappte Ansichten der in ihrer Längsmittellinie geschnittenen, abgesehen vom Abweiser 15 zu dieser Linie symmetrischen Klammer 20.

Eine Vormontagestellung der Klammer 20 im Führungsschlitz 9 wird durch die in Figur 6 dargestellten Maßnahmen ermöglicht.

Dort ist eine Draufsicht auf den zylindrischen Anschlußteil 5 gezeigt, welcher in Höhe des Führungsschlitzes 9 aufgeschnitten ist. Auch hier stehen wieder gleiche Bezugsziffern für gleiche Teile. Zum Umfassen der Fluidleitung 1 weisen die Schenkel 26, 27 eine Ausnehmung 28 mit zueinander parallelen Flanken auf. In den Führungsschlitz 9 ragen einerends beidseitig Absätze 29 hinein, die zwischen sich eine gegenüber der Breite des Führungsschlitzes 9 geringfügig kleinere lichte Weite lassen, welche aber dem Außenmaß des Arms 22 entspricht. Die beiden Schenkel 26 und 27 weisen an ihren freien Enden außenseitig stufige Ansätze 30 auf, die ein der Breite des Führungsschlitzes 9 entsprechendes Außenmaß aufspannen, jedoch nur unter elastischer Verformung des Arms 22 - die Schenkel 26, 27 müßten zusammengedrückt werden - durch die lichte Weite zwischen den verengenden Absätzen 29 des Führungsschlitzes 9 passen.

Da der Steg 23 weniger breit als die Längsöffnung des Führungsschlitzes 9 ist, läßt sich die Klammer 20 bzw. deren Arm 22 - Steg voran - ohne Verformung nur von dem anderen Ende des Führungsschlitzes 9 her rückwärts in die gezeigte Vormontagestellung einfädeln, aus welcher sie nach vollständigem Einstecken der Fluidleitung 1 gegenläufig in ihre Sicherungsstellung eingeschoben werden kann.

Die Ausnehmung 28 hat mindestens ein Öffnungsmaß, das dem Durchmesser der Fluidleitung 1 entspricht. Für eine Clipsanordnung ist hier wegen der engen Führung der stufigen Ansätze 30 im Führungsschlitz kein Raum, da die notwendige elastische Aufweitung der Schenkel 26/27 behindert wäre.

Da aber ein falsch positioniertes Widerlager 3 bei der zweiten Variante sogar noch oberhalb des Arms 21 der Klammer 20 bleibt, wird die Sichtkontrolle der Steckverbindung noch weiter vereinfacht.

Die Ausnehmungen 17 haben Werkzeugaufnahmefunktion: zum Trennen der verriegelten Steckverbindung braucht hier nur ein kleiner Schraubenzieher oder ein stabiler Draht 32 eingeführt zu werden, um die Klammern 13 oder 20 aus ihrer eingeschobenen Stellung unter Lösen der Clipsverbindungen (Ausnehmungen 16) aushebeln zu können.

Beide Bauformen von Klammern können als Massenware billig als Blech-Stanzbiegeteile gefertigt werden. Bei der Klammer 20 könnte der Arm 21 auch zur Vermeidung von Verwechslungen breiter als der Arm 22 gestanzt werden, so daß er nicht in den Führungsschlitz 9 einschiebbar wäre.

Beide Varianten von Führungsschlitzen bzw. deren Längsöffnungen können problemlos in spanender Fertigung (Fräsen, Stoßen) hergestellt werden.

Zur Ausbildung der die Vormontagestellung ermöglichenden Mittel könnten auch andere Ausdehnungsrichtungen, z.B. senkrecht zur Ebene des Führungsschlitzes, vorgesehen werden, wobei dann z.B. der Führungsschlitz bodenseitig eine sich nicht über seine ganze Länge erstreckende Nut aufweisen könnte, in welche eine parallel zum Abweiser nach unten abragende Fahne der jeweiligen Klammer eingreifen könnte.

4

EP 0 342 451 B1

**Patentansprüche**

1. Verriegelung einer fluidischen Steckverbindung zwischen einem Ende (2) einer mit einem diesem Ende axial benachbarten radial auskragenden Widerlager (1) versehenen Fluidleitung (1) einerseits und einem das Ende der Fluidleitung und das Widerlager dichtend in einer in seine Einsteckseite (8) mündenden Anschlußbohrung (4) aufnehmenden Anschlußteil (5) andererseits mit einer zur Sicherung der Steckverbindung gegen axiales Trennen in einen in einer Ebene parallel zur Einsteckseite des Anschlußteils verlaufenden und in einem bestimmten Abstand von der Einsteckseite angeordneten Führungsschlitz (9) im Anschlußteil
   – quer zur Achse der Steckverbindung und
   – das aufgenommene Widerlager mit mindestens einem Paar von Schenkeln überdeckend einschiebbaren U-förmigen Klammer (13; 20),
   wobei der Führungsschlitz (9) für das mindestens eine Paar von Schenkeln (11, 12; 26, 27) der Klammer (11; 20) eine zur Einsteckseite (8) gerichtete und in dieser austretende Längsöffnung (10; 19) aufweist,
   welche Längsöffnung des Führungsschlitzes (9) eine dem Durchmesser der Anschlußbohrung (4) entsprechende kleinste lichte Weite aufweist, welche kleiner als die Breite des Führungsschlitzes (9) ist,
   **dadurch gekennzeichnet,**
   daß an mindestens einem Schenkel (11; 26) der Klammer (11; 20) ein sich bei in den Führungsschlitz (9) eingeschobenen Schenkeln (11, 12; 26, 27) parallel zur Achse der Anschlußbohrung (4) mindestens über den Abstand des Führungsschlitzes (9) von der Einsteckseite (8) des Anschlußteils (5) erstreckender Abweiser (15) angeordnet ist,
   welcher in einer Projektion längs der Einschieberichtung der Klammer (11;20) in der Längsöffnung (10;19) des Führungsschlitzes (9) eine lichte Weite läßt, die kleiner als das Außenmaß des radial auskragenden Widerlagers (4) der Fluidleitung (1), jedoch geringfügig größer als das Außenmaß der Fluidleitung (1) in dem sich an das Widerlager (1) anschließenden, sich längs des Abweisers (15) erstreckenden Bereichs ist.

2. Verriegelung nach Anspruch 1,
   **dadurch gekennzeichnet,**
   daß der Führungsschlitz (9) durch eine Schwalbenschwanzführung (10') mit einer Längsöffnung (10) gebildet ist, deren Längsachse die Achse der Anschlußbohrung (4) schneidet und deren Einsenktiefe den Abstand des Führungsschlitzes (9) von der Einsteckseite (8) darstellt.

3. Verriegelung nach Anspruch 1,
   **dadurch gekennzeichnet,**
   daß der Führungsschlitz (9) Teil einer in die Einsteckseite (8) des Anschlußteils (4) eingeformten T-Nut (19) ist, deren Längsachse die Achse der Anschlußbohrung (4) schneidet und deren Einsenktiefe den Abstand des Führungsschlitzes (9) von der Einsteckseite (8) darstellt.

4. Verriegelung nach Anspruch 1,
   **dadurch gekennzeichnet,**
   daß in dem Führungsschlitz (9) einerseits und an der Klammer (20) oder an deren in dem Führungsschlitz (9) führbaren Schenkeln (26,27) andererseits ferner miteinander korrespondierende Vorsprünge (29;30) vorgesehen sind, welche ein verformungsfreies Einfädeln der Klammer (20) in den Führungsschlitz (9) bis hin zu einer definierten Vormontagestellung ermöglichen.

5. Verriegelung nach Anspruch 1 oder 4,
   **dadurch gekennzeichnet,**
   daß die Klammer (20) doppelt U-förmig mit zwei in je ein Paar von Schenkeln (24,25;26,27) gegabelten, durch einen Steg (23) miteinander verbundenen und unter Belassung eines freien Raumes (31) wenigstens annähernd parallel zueinander verlaufenden Armen (21;22) ausgebildet ist, daß die Höhe des durch den Steg (23) hergestellten freien Raums (31) zwischen den Armen (21;22) mindestens dem Abstand des Führungsschlitzes (9) von der Einsteckseite (8) des Anschlußteils (5) entspricht und etwa gleich der Höhe des an einem (26) der Schenkel der Klammer angeformten Abweisers (15) ist und daß die Breite des Stegs (23) kleiner als die lichte Weite der Längsöffnung (19) des Führungsschlitzes ist.

6. Verriegelung nach Anspruch 5,
   **dadurch gekennzeichnet,**
   daß der Führungsschlitz (9) an einem seiner Enden beidseitig seine Breite geringfügig verengende Absätze (29) aufweist und daß die in dem Führungsschlitz (9) führbaren Schenkel (26,27) der Klammer (20) ein der Verengung des Führungsschlitzes (9) durch die Absätze (29) entsprechendes Außenmaß aufweisen, welches an den freien Enden der Schenkel (26,27) durch stufige Ansätze (30) beidseitig auf die Breite des Führungsschlitzes (9) erweitert wird,
   so daß sich die freien Enden der Schenkel (26,27) nicht ohne elastische Verformung der Klammer (20) an den Absätzen (29) des Führungsschlitzes (9) vorbeischieben lassen.

5

7. Verriegelung nach Anspruch 6,

**dadurch gekennzeichnet,**

daß das im Führungsschlitz (9) führbare erste Paar von Schenkeln (26,27) in Achsrichtung der Anschlußbohrung (4) eine lichte Weite läßt, welche dem Außendurchmesser der Fluidleitung (1) mindestens entspricht und daß das bei eingeschobener Klammer (20) oberhalb der Einsteckseite (8) des Anschlußteils (5) angeordnete zweite Paar von Schenkeln (24,25) eine in Achsrichtung der Anschlußbohrung (4) weisende Ausnehmung (16) aufweist, welche die Fluidleitung (1) clipsartig umgreift, so daß die Klammer (13) in ihrer die Fluidleitung (1) in der Anschlußbohrung (4) sichernden Stellung gegen verformungsfreies Verschieben gesichert ist.

8. Verriegelung nach Anspruch 1,

**dadurch gekennzeichnet,**

daß das im Führungsschlitz (9) führbare Paar von Schenkeln (11,12) der Klammer (13) eine in Achsrichtung der Anschlußbohrung (4) weisende Ausnehmung (16) aufweist, welche die Fluidleitung (1) clipsartig umgreift, so daß die Klammer (13) in ihrer die Fluidleitung (1) in der Anschlußbohrung (4) sichernden Stellung gegen verformungsfreies Verschieben gesichert ist, und daß das von den Schenkeln (11,12) im Bereich der Ausnehmung (16) aufgespannte Außenmaß geringfügig kleiner als die Breite des Führungsschlitzes (9) ist.

9. Verriegelung nach Anspruch 1,

**dadurch gekennzeichnet,**

daß jede Klammer (13,20) wenigstens eine mit Abstand von der Fluidleitung (1) angeordnete, in der Verriegelungsstellung der Klammer (13,20) über die Kontur des Anschlußteils (5) hinausragende Ausnehmung (17) aufweist, welche zur Einführung eines Abziehwerkzeuges (32) vorgesehen ist.

**Claims**

1. Locking device of a fluid plug-in connection between one end (2) of a fluid pipe (1) provided with a radially protruding abutment (3) axially adjacent to this end, on the one hand, and a connecting part (5) accepting the end of the fluid pipe and the abutment, so as to provide a seal, in a connecting hole (4) emerging into its plug-in side (8), on the other having a U-shaped clamp (13; 20) which can be pushed into a guide slot (9), extending in a plane parallel to the plug-in side of the connecting part and located at a certain distance from the plug-in side, in the connecting part,

   – transverse to the axis of the plug-in connection and
   – overlapping the abutment accepted by means of at least one pair of branches,

in order to secure the plug-in connection against axial separation,

in which the guide slot (9) has an elongate opening (10; 19) directed towards the plug-in side (8) and emerging in this side for the at least one pair of branches (11, 12; 26, 27) of the clamp (13; 20),

   which elongate opening of the guide slot (9) has a minimum clearance corresponding to the diameter of the connecting hole (4), which clearance is smaller than the width of the guide slot (9),

**characterised in that,**

on at least one branch (11; 26) of the clamp (13; 20), a guard (15) extending parallel to the axis of the connecting hole (4) at least over the distance between the guide slot (9) and the plug-in side (8) of the connecting part (5) is located when the branches (11, 12; 26, 27) are inserted into the guide slot (9),

   which guard, in a projection along the insertion direction of the clamp (13; 20) in the elongate opening (10; 19) of the guide slot (9), permits a clearance which is smaller than the external dimension of the radially protruding abutment (3) of the fluid pipe (1) but slightly larger than the external dimension of the fluid pipe (1) in the region adjoining the abutment (3) and extending along the guard (15).

2. Locking device according to Claim 1,

**characterised in that**

the guide slot (9) is formed by a dovetail guide (10′) with an elongate opening (10) whose longitudinal axis intersects the axis of the connecting hole (4) and whose recess depth represents the distance between the guide slot (9) and the plug-in side (8).

3. Locking device according to Claim 1,

**characterised in that**

the guide slot (9) is part of a T-groove (19) formed in the plug-in side (8) of the connecting part (5), the longitudinal axis of the T-groove intersecting the axis of the connecting hole (4) and its recess depth representing the distance between the guide slot (9) and the plug-in side (8).

4. Locking device according to Claim 1,

**characterised in that**

mutually corresponding protrusions (29; 30) are also provided in the guide slot (9), on the one hand, and on

EP 0 342 451 B1

the clamp (20) or on its branches which can be guided in the guide slot (9), on the other hand, which protrusions permit deformation-free threading of the clamp (20) into the guide slot (9) as far as a defined pre-assembly position.

5. Locking device according to Claim 1 or 2,

**characterised in that**

the clamp (20) is designed double U-shaped with two arms (21; 22) extending at least approximately parallel to one another, each forked into a pair of branches (24, 25; 26, 27) which are connected together by a web (23), and leaving between them a free space (31), that the height of the free space (31) between the arms (21; 22) produced by the web (23) corresponds at least to the distance between the guide slot (9) and the plug-in side (8) of the connecting part (5) and is approximately equal to the height of the guard (15) formed on one (26) of the branches of the clamp and that the width of the web (23) is smaller than the clearance of the elongate opening (19) of the guide slot.

6. Locking device according to Claim 1,

**characterised in that**

the guide slot (9) has shoulders (29) slightly restricting its width on both sides of one of its ends and that the branches (26, 27), of the clamp (20), which can be guided in the guide slot 9, have an external dimension corresponding to the restriction of the guide slot (9) by the shoulders (29), which external dimension is widened at the free ends of the branches (26, 27) to the width of the guide slot (9) by stepped protrusions (30) on both sides, so that the free ends of the branches (26, 27) cannot be pushed past the shoulders (29) of the guide slot (9) without elastic deformation of the clamp (20).

7. Locking device according to Claim 6,

**characterised in that**

the first pair of branches (26, 27), which can be guided in the guide slot (9), permit a clearance in the axial direction of the connecting hole (4) which at least corresponds to the external diameter of the fluid pipe (1), and that the second pair of branches (24, 25) located above the plug-in side (8) of the connecting part (5) when the clamp is inserted (20) has a recess (16), pointing in the axial direction of the connecting hole (4) and embracing the fluid pipe (1) like a clip, so that the clamp (13) is secured against displacement, without deformation, in its position securing the fluid pipe (1) in the connecting hole (4).

8. Locking device according to Claim 1,

**characterised in that**

the pair of branches (11, 12), of the clamp (13), which can be guided in the guide slot (9) has a recess (16), pointing in the axial direction of the connecting hole (4) and embracing the fluid pipe (1) like a clip, so that the clamp (13) is secured against displacement, without deformation, in its position securing the fluid pipe (1) in the connecting hole (4), and that the clamped external dimension of the branches (11, 12) in the region of the recess (16) is slightly smaller than the width of the guide slot (9).

9. Locking device according to Claim 1,

**characterised in that**

each clamp (13, 20) has at least one recess (17) located at a distance from the fluid pipe (1) and protruding, in the locked position of the clamp (13, 20), beyond the contour of the connecting part (5), which recess is provided for introducing an extraction tool (32).

**Revendications**

1. Dispositif de verrouillage pour une connexion fluidique par engagement entre, d'une part, une extrémité (2) d'une conduite de fluide (1) qui est dotée d'une butée (3) radialement saillante et axialement voisine de cette extrémité, et, d'autre part, un élément de raccordement (5) recevant en étanchéité l'extrémité de la conduite de fluide et la butée dans un orifice de raccordement (4) débouchant dans son côté d'engagement (8), avec une agrafe en U (13; 20) qui, afin d'empêcher la séparation axiale de la connexion par engagement, peut être enfilée,

– transversalement à l'axe de la connexion et

– en recouvrant la butée par au moins une paire de branches,

dans une fente de guidage (9) de l'élément de raccordement qui s'étend dans un plan parallèle au côté d'engagement de l'élément de raccordement et est disposée à une distance donnée de ce côté,

la fente de guidage (9) pour la ou les paires de branches (11, 12; 26, 27) de l'agrafe (13; 20) présentant une ouverture longitudinale (10; 19) orientée vers le côté d'engagement (8) et débouchant dans ce dernier, ouverture qui présente une largeur de passage minimale, correspondant au diamètre de l'orifice de raccordement (4), qui est inférieure à la largeur de la fente de guidage (9),

**caractérisé**

en ce qu'un butoir (15) est disposé sur au moins une branche (11; 26) de l'agrafe (13; 20), butoir qui, lorsque les branches (11, 12; 26, 27) sont enfilées dans la fente de guidage (9), s'étend parallèlement à l'axe de l'orifice de raccordement (4) au moins sur la distance entre la fente de guidage (9) et le côté d'engagement (8) de l'élément de raccordement (5),

le butoir (15) laissant libre dans l'ouverture longitudinale (10; 19) de la fente de guidage (9), dans une projection le long de la direction d'enfilage de l'agrafe (13; 20), une largeur de passage qui est inférieure à la dimension extérieure de la butée radialement saillante (3) de la conduite de fluide (1), mais légèrement supérieure à la dimension extérieure de la conduite de fluide (1) dans la région qui se raccorde à la butée (3) et s'étend le long du butoir (15).

2. Dispositif de verrouillage selon la revendication 1,

**caractérisé**

en ce que la fente de guidage (9) est formée par un guidage en queue d'aronde (10′), présentant une ouverture longitudinale (10) dont l'axe longitudinal coupe l'axe de l'orifice de raccordement (4) et dont la profondeur de pénétration représente la distance entre la fente de guidage (9) et le côté d'engagement (8).

3. Dispositif de verrouillage selon la revendication 1,

**caractérisé**

en ce que la fente de guidage (9) fait partie d'une rainure (19) en T, formée dans le côté d'engagement (8) de l'élément de raccordement (5), dont l'axe longitudinal coupe l'axe de l'orifice de raccordement (4) et dont la profondeur de pénétration représente la distance entre la fente de guidage (9) et le côté d'engagement (8).

4. Dispositif de verrouillage selon la revendication 1,

**caractérisé**

en ce que des saillies mutuellement correspondantes (29; 30) sont prévues d'une part dans la fente de guidage (9) et d'autre part sur l'agrafe (20) ou sur ses branches (26, 27) pouvant être guidées dans la fente de guidage (9), saillies qui permettent d'enfiler sans déformation l'agrafe (20) dans la fente de guidage (9) jusqu'à une position définie de pré-assemblage.

5. Dispositif de verrouillage selon la revendication 1 ou 4,

**caractérisé**

en ce que l'agrafe (20) est réalisée en forme de double U avec deux bras (21; 22) qui bifurquent chacun en une paire de branches (24, 25; 26, 27), sont mutuellement reliés par une âme (23) et s'étendent au moins approximativement parallèlement entre eux en laissant un espace libre (31), en ce que l'espace libre (31) formé entre les bras (21, 22) par l'âme (23) correspond au moins à la distance entre la fente de guidage (9) et le côté d'engagement (8) de l'élément de raccordement (5) et est approximativement égal à la hauteur du butoir (15) formé sur une (26) des branches de l'agrafe, et en ce que la largeur de l'âme (23) est inférieure à la largeur de passage de l'ouverture longitudinale (19) de la fente de guidage.

6. Dispositif de verrouillage selon la revendication 5,

**caractérisé**

en ce que la fente de guidage (9) présente de part et d'autre, à une de ses extrémités, des décrochements (29) qui réduisent légèrement sa largeur, et en ce que les branches (26, 27) de l'agrafe (20) pouvant être introduites dans la fente de guidage (9) présentent une dimension extérieure qui correspond au rétrécissement de la fente de guidage (9) par les décrochements (29) et qui, aux extrémités libres des branches (26, 27), est élargie à la largeur de la fente de guidage (9) par des appendices en gradins (30) prévus de part et d'autre, de sorte que les extrémités libres des branches (26, 27) ne peuvent passer les décrochements (29) de la fente de guidage (9) sans déformation élastique de l'agrafe (20).

7. Dispositif de verrouillage selon la revendication 6,

**caractérisé**

en ce que la première paire de branches (26, 27) pouvant être introduite dans la fente de guidage (9) laisse, dans le sens axial de l'orifice de raccordement (4), une largeur de passage qui correspond au moins au diamètre extérieur de la conduite de fluide (1), et en ce que la seconde paire de branches (24, 25), disposée au-dessus du côté d'engagement (8) de l'élément de raccordement (5) lorsque l'agrafe (20) est enfilée, présente un évidement (16) qui est orienté dans le sens axial de l'orifice de raccordement (4) et entoure la conduite de fluide (1) à la manière d'un clip, de sorte que l'agrafe (20) est, dans sa position assujettissant la conduite de fluide (1) dans l'orifice de raccordement (4), empêchée de coulisser sans déformation.

8. Dispositif selon la revendication 1,

**caractérisé**

en ce que la paire de branches (11, 12) de l'agrafe (13) pouvant être introduite dans la fente de guidage (9) présente un évidement (16) qui est orienté dans le sens axial de l'orifice de raccordement (4) et qui entoure la conduite de fluide (1) à la manière d'un clip, de sorte que l'agrafe (13) est, dans sa position assujettissant

8

la conduite de fluide (1) dans l'orifice de raccordement (4), empêchée de coulisser sans déformation, et en ce que la dimension extérieure couverte par les branches (11, 12) dans la région de l'évidement (16) est légèrement inférieure à la largeur de la fente de guidage (9).

9. Dispositif de verrouillage selon la revendication 1,
**caractérisé**
en ce que chaque agrafe (13, 20) présente au moins un évidement (17), disposé à distance de la conduite de fluide (1) et dépassant du contour de l'élément de raccordement (5) dans la position verrouillée de l'agrafe (13, 20), qui est prévu pour l'introduction d'un outil d'extraction (32).

Fig.1

Fig.2

Fig.3

Fig.4

Fig.5

Fig.6

EP 0 342 451 B1